# EUROPEAN PATENT SPECIFICATION

(11) **EP 2 954 745 B1**
(45) Date of publication and mention of the grant of the patent: **16.11.2016**
(21) Application number: 14707022.1
(22) Date of filing: 06.02.2014
(51) Int. Cl.: H04W 16/10

(54) **APPARATUS AND METHOD FOR INTER CELL INTERFERENCE COORDINATION**
SYSTEM UND VERFAHREN ZUR INTERFERENZKOORDINIERUNG ZWISCHEN ZELLEN
APPAREIL ET PROCÉDÉ DESTINÉS À LA COORDINATION DU BROUILLAGE INTERCELLULAIRE

(30) Priority: 07.02.2013 US 201361762250 P; 13.09.2013 US 201314026564
(43) Date of publication of application: 16.12.2015
(73) Proprietor: Qualcomm Incorporated, San Diego, CA 92121-1714 (US)
(72) Inventor: MESHKATI, Farhad, San Diego, California 92121-1714 (US); ZHANG, Lili, San Diego, California 92121-1714 (US); KADOUS, Tamer Adel, San Diego, California 92121-1714 (US); PATEL, Chirag Sureshbhai, San Diego, California 92121-1714 (US); CHANDE, Vinay, San Diego, California 92121-1714 (US); SADEK, Ahmed Kamel, San Diego, California 92121-1714 (US); YAVUZ, Mehmet, San Diego, California 92121-1714 (US)
(74) Representative: Dunlop, Hugh Christopher
(86) International application number: PCT/US2014/015068
(87) International publication number: WO 2014/124117

(56) References cited:
- US-A1- 2010 020 771
- US-A1- 2012 087 266
- US-A1- 2012 207 044

## Description

### BACKGROUND

### Field

The present disclosure relates generally to communication systems, and more particularly, to inter cell interference coordination.

### Background

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power). Examples of such multiple-access technologies include code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

These multiple access technologies have been adopted in various telecommunication standards to provide a common protocol that enables different wireless devices to communicate on a municipal, national, regional, and even global level. An example of an emerging telecommunication standard is Long Term Evolution (LTE). LTE is a set of enhancements to the Universal Mobile Telecommunications System (UMTS) mobile standard promulgated by Third Generation Partnership Project (3GPP). It is designed to better support mobile broadband Internet access by improving spectral efficiency, lower costs, improve services, make use of new spectrum, and better integrate with other open standards using OFDMA on the downlink (DL), SC-FDMA on the uplink (UL), and multiple-input multiple-output (MIMO) antenna technology. However, as the demand for mobile broadband access continues to increase, there exists a need for further improvements in LTE technology. Preferably, these improvements should be applicable to other multi-access technologies and the telecommunication standards that employ these technologies.

In networks or areas with high volume of small cell deployments, a user equipment (UE) or a mobile station may see many small cells and/or macro cells with similar pilot signal levels. This may result in degradation of network performance due to interference from pilots of neighboring cells, commonly referred to as pilot pollution. While pilot pollution may be reduced or mitigated by using inter cell interference coordination (ICIC) mechanism such as a fractional frequency reuse (FFR) procedure, the triggers for ICIC mechanism do not necessarily take pilot pollution into consideration. For example, ICIC may be triggered based on one of reference signal received power (RSRP) or reference signal received quality (RSRQ) or channel quality indicator (CQI) measurements. However, ICIC triggers based on RSRP, RSRQ or CQI measurements do not really address the problems associated with pilot pollution as RSRP measurements are not be a good indicator of pilot pollution and RSRQ or CQI measurement do not distinguish between noise limited and interference limited scenarios.

US2010/020771 relates to techniques for mitigating pilot pollution in a wireless network are described. A cell may send a common pilot at a first density and a first transmit power level during a first time period and may send the common pilot at a second density and a second transmit power level during a second time period. The second density may be lower than the first density and/or the second transmit power level may be lower than the first transmit power level. The cell may determine whether to reduce the density and/or transmit power of the common pilot based on network loading, SINRs of terminals, etc.

Thus, there is a desire for a method and apparatus for triggering an ICIC mechanism based on pilot pollution.

### SUMMARY

The following presents a simplified summary of one or more aspects in order to provide a basic understanding of such aspects. This summary is not an extensive overview of all contemplated aspects, and is intended to neither identify key or critical elements of all aspects not delineate the scope of any or all aspects. Its sole purpose is to present some concepts of one or more aspects in a simplified form as a prelude to the more detailed description that is presented later.

The present disclosure presents an example method and apparatus of triggering an inter cell interference coordination (ICIC) mechanism in a wireless network. For example, the present disclosure presents an example method for triggering an ICIC mechanism that includes identifying a pilot pollution metric and determining when a pilot pollution condition based at least on the pilot pollution metric is satisfied. In addition, such method may include triggering an ICIC mechanism when the pilot pollution condition is satisfied.

In an additional aspect, the present disclosure presents an example apparatus for triggering an inter cell interference coordination (ICIC) mechanism in a wireless network which may include means for identifying a pilot pollution metric and means for determining when a pilot pollution condition based at least on the pilot pollution metric is satisfied. In addition, such apparatus may include means for triggering an ICIC mechanism when the pilot pollution condition is satisfied.

Moreover, the present disclosure presents an example computer program product for triggering an inter cell interference coordination (ICIC) mechanism in a network, comprising a computer-readable medium comprising code executable by a computer for identifying a pilot pollution metric and determining when a pilot pollution condition based at least on the pilot pollution metric is satisfied. In addition, such computer program product may include code for triggering an ICIC mechanism when the pilot pollution condition is satisfied.

In a further aspect, the present disclosure presents an example apparatus for triggering an inter cell interference coordination (ICIC) mechanism in a wireless network which may include a pilot pollution metric identifier for identifying a pilot pollution metric and a pilot pollution condition determiner for determining when a pilot pollution condition based at least on the pilot pollution metric is satisfied. In addition, such apparatus may include an ICIC trigger for triggering an ICIC mechanism when the pilot pollution condition is satisfied.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents.

### BRIEF DESCRIPTION OF THE DRAWINGS

FIG. 1 is a schematic diagram of a network architecture including an aspect of inter cell interference coordination;
FIG. 2 is a flow chart of an aspect of triggering an inter cell interference coordination;
Fig. 3 is a block diagram illustrating aspects of a logical grouping of electrical components as contemplated by the present disclosure;
FIG. 4 is a block diagram illustrating aspects of a computer device according to the present disclosure;
Fig. 5 is a block diagram illustrating an example of a hardware implementation for an apparatus employing a processing system;
Fig. 6 is a block diagram conceptually illustrating an example of a telecommunications system;
Fig. 7 is a conceptual diagram illustrating an example of an access network; and
Fig. 8 is a block diagram conceptually illustrating an example of a NodeB in communication with a UE in a telecommunications system.

### DETAILED DESCRIPTION

The detailed description set forth below in connection with the appended drawings is intended as a description of various configurations and is not intended to represent the only configurations in which the concepts described herein may be practiced. The detailed description includes specific details for the purpose of providing a thorough understanding of various concepts. However, it will be apparent to those skilled in the art that these concepts may be practiced without these specific details. In some instances, well known structures and components are shown in block diagram form in order to avoid obscuring such concepts.

The present disclosure provides an apparatus and a method of triggering an inter cell interference coordination (ICIC) mechanism in a wireless network which may include identifying a pilot pollution metric, determining when a pilot pollution condition based at least on the pilot pollution metric is satisfied, and triggering an ICIC mechanism when the pilot pollution condition is satisfied.

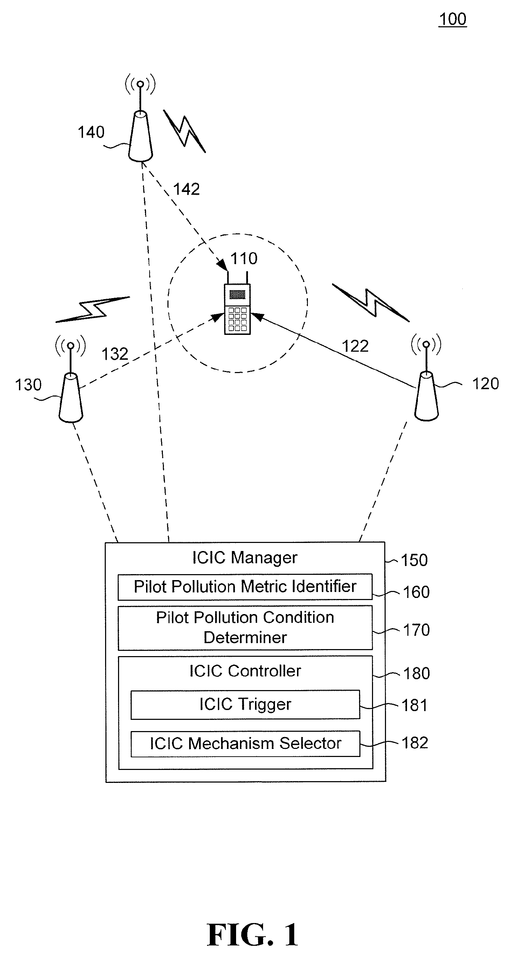

Referring to Fig. 1, a wireless system 100 is illustrated for triggering an inter cell interference coordination (ICIC) mechanism. In an aspect, system 100 includes one or more user equipments (UE) 110 and one or more cells 120, 130, and/or 140, where cell 120 may be the serving cell of UE 110, that is, UE 110 is camped on cell 120. A cell as used herein may include a base station operating within a coverage area, and the cell may be a small coverage cell or a macro cell, that can communicate with UE 110. Cells 120, 130, and 140 may be also be referred to as a Node B, an evolved Node B, a femto cell, a macro cell or an access point. A small coverage cell or a small cell, also referred to as a femtocell or pico cell, may cover a relatively small geographic area (for example, a home or an office), as compared to a macro cell, and may support communications for terminals having association with the femto cell (for example, terminals belonging to residents of the home or the office). Also, UE 110 may be referred to as a terminal, a mobile station (MS), an access terminal (AT), a subscriber unit, etc.

In an aspect, a solid line 122 indicates transmission of a pilot signal or a common reference signal (CRS) from serving cell 120 to UE 110. A serving cell serves a UE on the downlink and/or uplink. However, uplink transmissions are not shown in Fig. 1 for simplicity. A dashed line 132 and/or 142 indicates transmission of a pilot signal or a CRS signal from a neighboring cell to UE 110.

In wireless network 100, cells 120, 130, and/or 140 may periodically transmit one or more common pilot or CRS signals. These signals may be used for different purposes and may be referred to by different names. For example, a common pilot signal may used for channel estimation, channel quality measurements, or signal strength measurements, etc.

In an aspect, as terminal 110 moves within the coverage area of cells 120, 130, and/or 140, the relative strengths of pilot signals from cells 120, 130, and/or 140 at UE 110 may change depending on the proximity of UE 110 to each of these cells. Additionally, other radio frequency (RF) variables may also influence the measured strengths of the pilot signals. In an aspect, for example, pilot pollution may be caused by a pilot signal that is from a nearest cell, for example, cells 130 and/or 140, having a similar or greater received strength at UE 110 as the pilot signal from the serving cell 120.

In an aspect, system 100 includes an inter-cell interference coordination (ICIC) Manager 150 configured for triggering an ICIC mechanism in a wireless network. For example, in an aspect, ICIC Manager 150 may be configured to include a Pilot Pollution Metric Identifier 160 and a Pilot Pollution Condition Determiner 170. In an additional aspect, for example, ICIC Manager 150 may be further configured to include an ICIC Controller 180 that may be configured to include an ICIC Trigger 181 and an ICIC Mechanism Selector.

In an aspect, Pilot Pollution Metric Identifier 160 may be configured to determine a metric that can be used to identify pilot pollution in wireless network 100. For example, the metric identified may include one or more of the following, for example, a number of pilots or common reference signals (CRS) which are within a pre-determined range, for example, within "X" dB, of a serving (or strongest) cell pilot power level, a combination of reference signal received power (RSRP) and reference signal received quality (RSRQ) measurements, and/or a combination of RSRP and Interference measurements (Io), and a combination of RSRQ and Io. In an additional aspect, Channel Quality Indicator (CQI) measurements may be identified as a pilot pollution metric.

In an aspect, any one or any combination of the metrics described above may be used to detect pilot pollution in wireless network 100. In an additional aspect, Pilot Pollution Metric Identifier 160 may also measure the values of the identified metric, for example, by receiving measurements collected at UE 110 and/or at one or more of the cells 120, 130, and/or 140. In an example aspect, a network listen module in cells 120, 130, and/or 140 may measure values of the identified metric for the respective cell when ICIC Manager 150 is located within that cells.

In an aspect, Pilot Pollution Condition Determiner 170 may be configured to determine when a pilot pollution condition based on the pilot pollution metric is satisfied. For example, in an aspect, Pilot Pollution Condition Determiner 170 may compare the value of one or more of the identified pilot pollution metrics with a corresponding threshold value of the metric. In an additional aspect, the threshold values for the pilot pollution metric may be pre-configured in the network either at a network level or a cluster level or a cell level. This provides the network operators with flexibility to configure threshold values based on the density of the cells in a geographic area to improve network and/or UE performance.

For example, Pilot Pollution Condition Determiner 170 may determine whether the number of pilots within "X" dB of a serving cell is higher than a threshold value of "N" for the identified pilot pollution metric. If the value of N" is configured as two and if there are three pilot signals within "X" dB of the serving pilot, the condition is considered as satisfied, that is, UE 110 may be considered as interference limited, that is, a pilot pollution scenario exists. In an example aspect, the value of X and N may be values set by an operator of system 100. In another additional aspect, for example, pilot pollution condition may be considered as satisfied when RSRP > Y and RSRQ < Z, where "Y" and "Z" may be threshold values for the respective metrics. In an additional example, UE 110 may be determined to be interference limited if RSRP > V and Io > V', where V is a threshold value for the corresponding metric.

In other words, Pilot Pollution Condition Determiner 170 evaluates whether the determined metrics meet one or more pilot pollution conditions, which may include comparing one or more metric values against the corresponding thresholds, wherein the one or more pilot pollution conditions are configured to distinguish between interference limited scenarios, such as pilot pollution, or other limiting scenarios, such as noise limited scenarios or thermal limited scenarios.

Further, in an aspect, for example, Pilot Pollution Condition Determiner 170 may be configured to apply multiple comparison tests to the pilot pollution metrics and make a decision to identify a pilot pollution scenario based on the collective output of these tests. For example, Pilot Pollution Condition Determiner 170 may determine UE 110 to be interference limited or pilot pollution condition met, if any one or more of the tests are satisfied. These tests may correspond to different sets of thresholds. This way of operation allows a multidimensional approach to be used for the triggering of an ICIC mechanism.

In an aspect, ICIC Controller 180 may be configured to include an ICIC trigger 181 and an ICIC Mechanism Selector 182. For example, once Pilot Pollution Condition Determiner 170 determines that the pilot pollution metric is satisfied, ICIC Controller may be configured to include an ICIC Trigger 181 that may be configured to trigger an ICIC mechanism and send a message to ICIC mechanism selector 182 to select an ICIC mechanism. For example, once Pilot Pollution Condition Determiner 170 determines that the identified pilot pollution metric is above the respective metric's threshold value, ICIC Controller 180 generates an ICIC trigger 181 to send a message to ICIC Mechanism Selector 182 to select an ICIC mechanism to mitigate pilot pollution. In an example aspect, the ICIC mechanism selected may be in a frequency domain or in a time domain, and in the frequency domain may include performing a fractional frequency reuse (FFR) or a soft FFR procedure. In an additional aspect, for example, ICIC manager 150 may be configured to exist in a distributed manner at one or more of cells 120, 130, and/or 140, or in a centralized manner, for example, at one of the cells 120, 130, or 140.

Therefore, according to the present method and apparatus, ICIC Manager 150 may trigger an ICIC mechanism in the wireless network 100 to reduce and/or mitigate inter-cell interference.

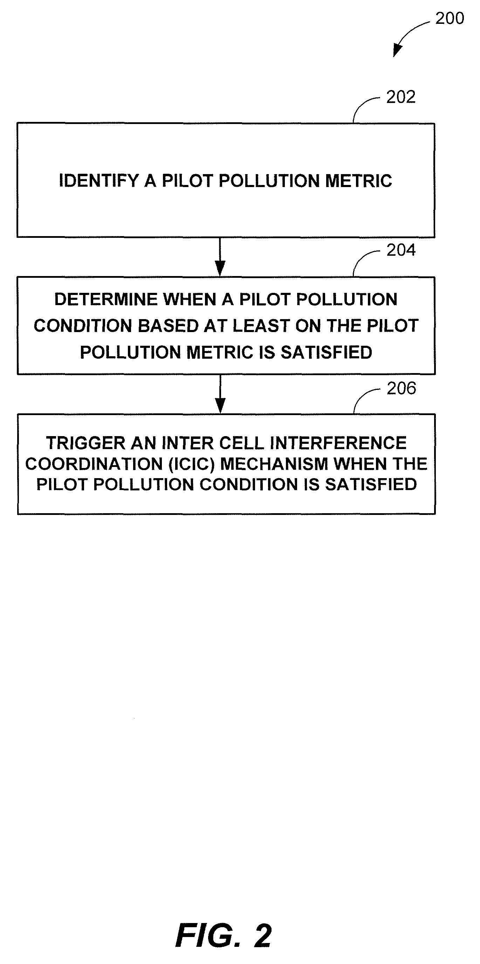

FIG.2 illustrates an example methodology 200 for triggering an inter cell interference coordination in a wireless network.

In an aspect, at block 202, methodology 200, may include identifying a pilot pollution metric. For example, in an aspect, ICIC Manager 150 and/or Pilot Pollution Metric Identifier 160 may be configured to identify a pilot pollution metric. In an additional aspect, the pilot pollution metric may be measured or collected by cells 120, 130, and/or 140 and/or UE 110.

Further, at block 204, methodology 200 may include determining when a pilot pollution condition based at least on the pilot pollution metric is satisfied. For example, in an aspect, ICIC Manager 150 and/or Pollution Condition Determiner 170 may be configured to determine whether the pilot pollution based at least on the pilot pollution metric is satisfied. For example, Pilot Pollution Condition Determiner 170 may compare a value of pilot pollution metric to a respective threshold value to determine when the condition is satisfied.

Furthermore, at block 206, methodology 200 may include triggering an ICIC mechanism when the pilot pollution condition is satisfied. For example, in an aspect, ICIC Manager 150 and/or ICIC Controller 180 and/or ICIC Trigger 181 and/or ICIC Mechanism Selector 182 may be configured to trigger and/or select an ICIC mechanism when the pilot pollution condition is satisfied.

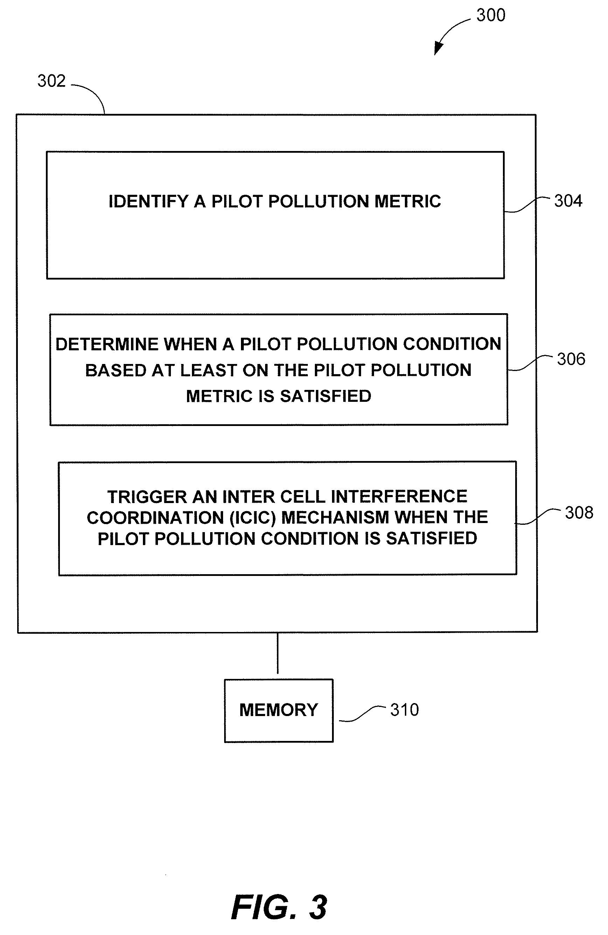

Referring to FIG. 3, an example system 300 is displayed for triggering an inter cell interference coordination (ICIC) mechanism in a wireless network. For example, system 300 can reside at least partially within a base station, for example, cells 120, 130, and/or 140 (Fig. 1). It is to be appreciated that system 300 is represented as including functional blocks, which can be functional blocks that represent functions implemented by a processor, software, or combination thereof (for example, firmware). System 300 includes a logical grouping 302 of electrical components that can act in conjunction. For instance, logical grouping 302 may include an electrical component 304 for identifying a pilot pollution metric. In an aspect, electrical component 304 may comprise ICIC Manager 150 and/or Pilot Pollution Metric Identifier 160 (Fig. 1).

Additionally, logical grouping 302 may include an electrical component 306 for determining when a pilot pollution condition based at least on the pilot pollution metric is satisfied. In an aspect, electrical component 306 may comprise ICIC Manager 150 and/or Pilot Pollution Condition Determiner 170 (Fig. 1).

Additionally, logical grouping 302 may include an electrical component 308 for triggering an ICIC mechanism when the pilot pollution condition is satisfied. In an aspect, electrical component 308 may comprise ICIC Manager 150 and/or ICIC Controller 180 for triggering an ICIC mechanism when the pilot condition is satisfied. In an additional aspect, electrical 308 may comprise ICIC Trigger 181 and/or ICIC Mechanism Selector 182.

Additionally, system 300 can include a memory 310 that retains instructions for executing functions associated with the electrical components 304, 306, and 308, stores data used or obtained by the electrical components 304, 306, and 308 etc. While shown as being external to memory 310 it is to be understood that one or more of the electrical components 304, 306, and 308 can exist within memory 310. In one example, electrical components 304, 306, and 308 can comprise at least one processor, or each electrical component 304, 306, and 308 can be a corresponding module of at least one processor. Moreover, in an additional or alternative example, electrical components 304, 306, and 308 can be a computer program product including a computer readable medium, where each electrical component 304, 306, and 308 can be corresponding code.

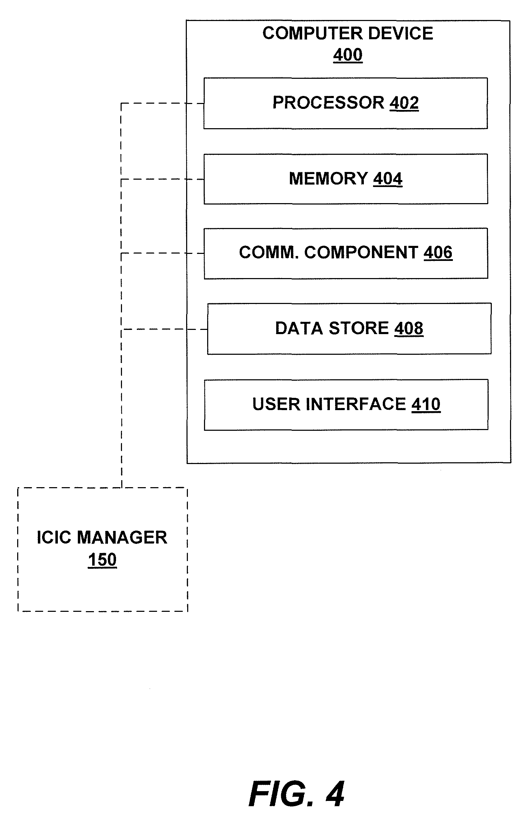

Referring to FIG. 4, in one aspect, any of base station 120, 130, and/or 140, and/or UE 110 including ICIC Manager 150 (FIG. 1) may be represented by a specially programmed or configured computer device 400. In one aspect of implementation, computer device 400 may include ICIC Manager 150 which may be configured to include Pilot Pollution Metric Identifier 160 and/or Pilot Pollution Condition Determiner 170 and/or ICIC Controller 180 (FIG. 1), such as in specially programmed computer readable instructions or code, firmware, hardware, or some combination thereof. Computer device 400 includes a processor 402 for carrying out processing functions associated with one or more of components and functions described herein. Processor 402 can include a single or multiple set of processors or multi-core processors. Moreover, processor 402 can be implemented as an integrated processing system and/or a distributed processing system.

Computer device 400 further includes a memory 404, such as for storing data used herein and/or local versions of applications being executed by processor 402. Memory 404 can include any type of memory usable by a computer, such as random access memory (RAM), read only memory (ROM), tapes, magnetic discs, optical discs, volatile memory, non-volatile memory, and any combination thereof.

Further, computer device 400 includes a communications component 406 that provides for establishing and maintaining communications with one or more parties utilizing hardware, software, and services as described herein. Communications component 406 may carry communications between components on computer device 400, as well as between computer device 400 and external devices, such as devices located across a communications network and/or devices serially or locally connected to computer device 400. For example, communications component 406 may include one or more buses, and may further include transmit chain components and receive chain components associated with a transmitter and receiver, respectively, or a transceiver, operable for interfacing with external devices. In an additional aspect, communications component 406 may be configured to receive one or more pages from one or more subscriber networks. In a further aspect, such a page may correspond to the second subscription and may be received via the first technology type communication services.

Additionally, computer device 400 may further include a data store 408, which can be any suitable combination of hardware and/or software, that provides for mass storage of information, databases, and programs employed in connection with aspects described herein. For example, data store 408 may be a data repository for applications not currently being executed by processor 402 and/or any threshold values or finger position values.

Computer device 400 may additionally include a user interface component 410 operable to receive inputs from a user of computer device 400 and further operable to generate outputs for presentation to the user. User interface component 410 may include one or more input devices, including but not limited to a keyboard, a number pad, a mouse, a touch-sensitive display, a navigation key, a function key, a microphone, a voice recognition component, any other mechanism capable of receiving an input from a user, or any combination thereof. Further, user interface component 410 may include one or more output devices, including but not limited to a display, a speaker, a haptic feedback mechanism, a printer, any other mechanism capable of presenting an output to a user, or any combination thereof.

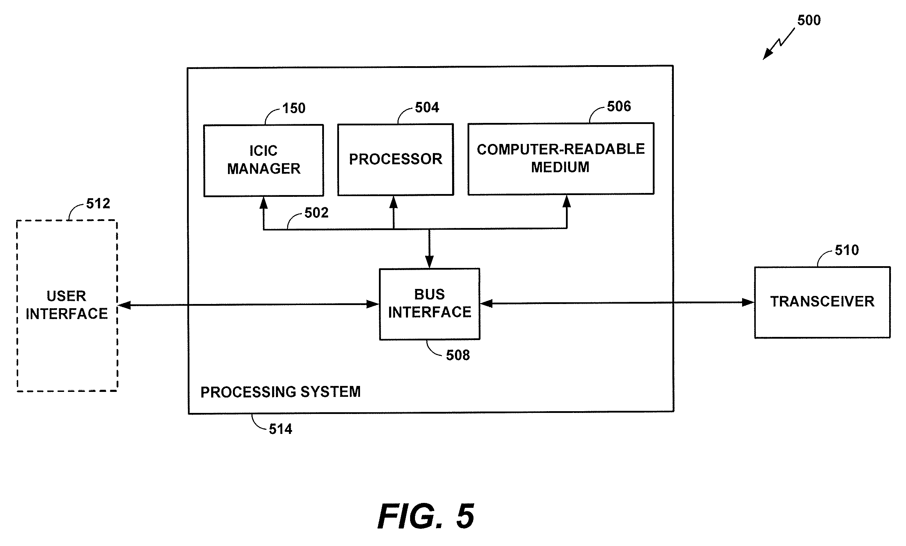

FIG. 5 is a block diagram illustrating an example of a hardware implementation for an apparatus 500, for example, including ICIC Manager 150 that may be configured to include Pilot Pollution Metric Identifier 160 and/or Pilot Pollution Condition Determiner 170 and/or ICIC Controller 180 of Fig. 1, employing a processing system 514 for carrying out aspects of the present disclosure, such as method for joint power and resource management. In this example, the processing system 514 may be implemented with a bus architecture, represented generally by a bus 502. The bus 502 may include any number of interconnecting buses and bridges depending on the specific application of the processing system 514 and the overall design constraints. The bus 502 links together various circuits including one or more processors, represented generally by the processor 504, computer-readable media, represented generally by the computer-readable medium 505, and one or more components described herein, such as, but not limited to, ICIC Manager 150 and/or Pilot Pollution Metric Identifier 160 and/or Pilot Pollution Condition Determiner 170 and/or ICIC Controller 180 (Fig. 1). The bus 502 may also link various other circuits such as timing sources, peripherals, voltage regulators, and power management circuits, which are well known in the art, and therefore, will not be described any further. A bus interface 508 provides an interface between the bus 502 and a transceiver 510. The transceiver 510 provides a means for communicating with various other apparatus over a transmission medium. Depending upon the nature of the apparatus, a user interface 512 (*e.g.,* keypad, display, speaker, microphone, joystick) may also be provided.

The processor 504 is responsible for managing the bus 502 and general processing, including the execution of software stored on the computer-readable medium 505. The software, when executed by the processor 504, causes the processing system 514 to perform the various functions described infra for any particular apparatus. The computer-readable medium 505 may also be used for storing data that is manipulated by the processor 504 when executing software.

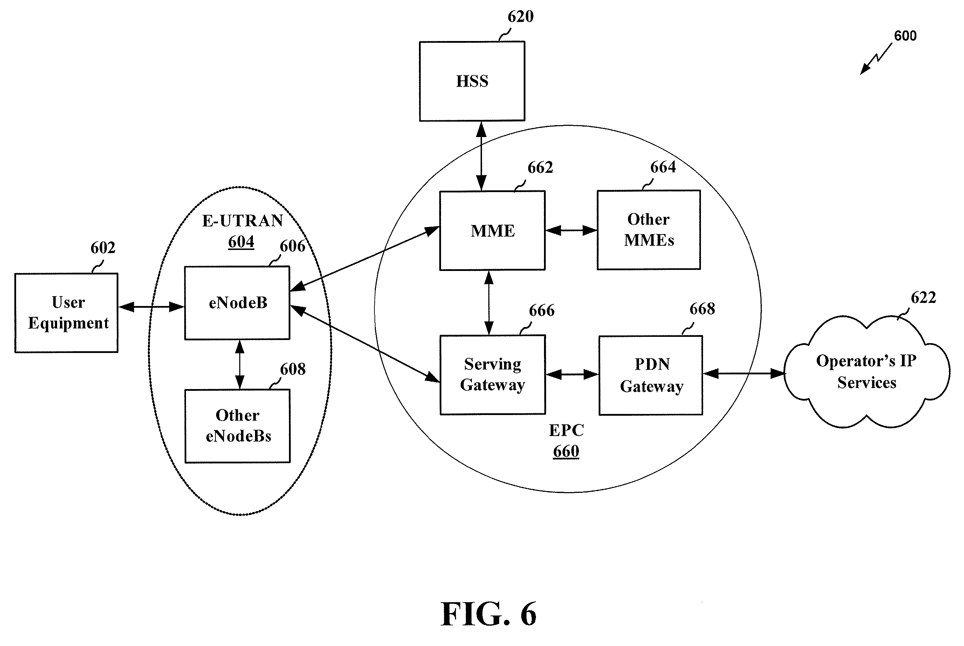

FIG. 6 is a diagram illustrating a long term evolution (LTE) network architecture 600 employing various apparatuses of wireless communication system 100 (Fig. 1) and may include one or more base stations configured to include an ICIC Manager 150 (Fig. 1). The LTE network architecture 600 may be referred to as an Evolved Packet System (EPS) 600. EPS 600 may include one or more user equipment (UE) 602, an Evolved UMTS Terrestrial Radio Access Network (E-UTRAN) 604, an Evolved Packet Core (EPC) 660, a Home Subscriber Server (HSS) 620, and an Operator's IP Services 622. The EPS can interconnect with other access networks, but for simplicity those entities/interfaces are not shown. As shown, the EPS provides packet-switched services, however, as those skilled in the art will readily appreciate, the various concepts presented throughout this disclosure may be extended to networks providing circuit-switched services.

The E-UTRAN includes the evolved Node B (eNB) 606 and other eNBs 608. The eNB 606 provides user and control plane protocol terminations toward the UE 602. The eNB 606 may be connected to the other eNBs 608 via an X2 interface (i.e., backhaul). The eNB 606 may also be referred to by those skilled in the art as a base station, a base transceiver station, a radio base station, a radio transceiver, a transceiver function, a basic service set (BSS), an extended service set (ESS), or some other suitable terminology. The eNB 606 provides an access point to the EPC 660 for a UE 602. Examples of UEs 602 include a cellular phone, a smart phone, a session initiation protocol (SIP) phone, a laptop, a personal digital assistant (PDA), a satellite radio, a global positioning system, a multimedia device, a video device, a digital audio player (e.g., MP3 player), a camera, a game console, or any other similar functioning device. The UE 602 may also be referred to by those skilled in the art as a mobile station, a subscriber station, a mobile unit, a subscriber unit, a wireless unit, a remote unit, a mobile device, a wireless device, a wireless communications device, a remote device, a mobile subscriber station, an access terminal, a mobile terminal, a wireless terminal, a remote terminal, a handset, a user agent, a mobile client, a client, or some other suitable terminology.

The eNB 606 is connected by an S1 interface to the EPC 660. The EPC 660 includes a Mobility Management Entity (MME) 662, other MMEs 664, a Serving Gateway 666, and a Packet Data Network (PDN) Gateway 668. The MME 662 is the control node that processes the signaling between the UE 602 and the EPC 610. Generally, the MME 612 provides bearer and connection management. All user IP packets are transferred through the Serving Gateway 666, which itself is connected to the PDN Gateway 668. The PDN Gateway 668 provides UE IP address allocation as well as other functions. The PDN Gateway 668 is connected to the Operator's IP Services 622. The Operator's IP Services 622 include the Internet, the Intranet, an IP Multimedia Subsystem (IMS), and a PS Streaming Service (PSS).

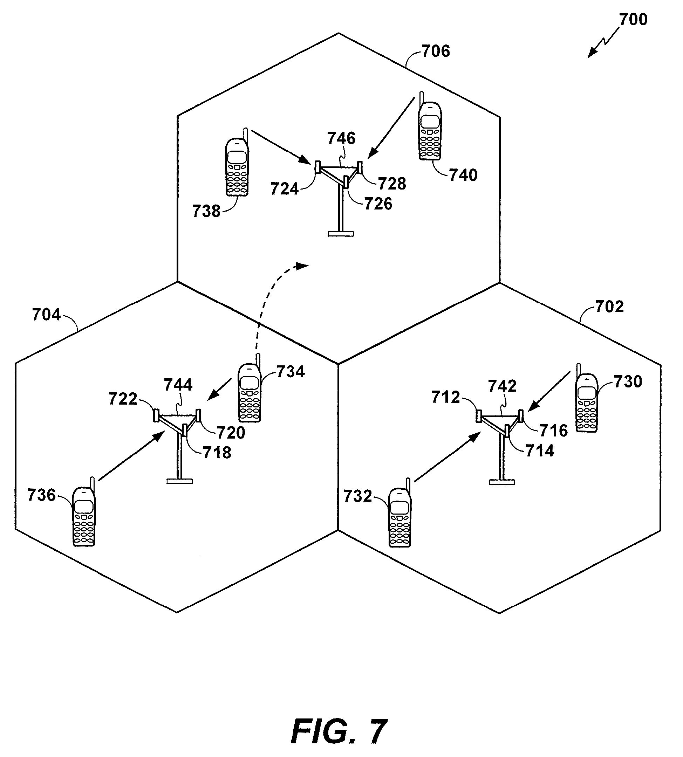

Referring to FIG. 7, an access network 700 in UTRAN architecture is illustrated, and may include one or more base stations configured to include ICIC Manager 150 which may be configured to include Pilot Pollution Metric Identifier 160 and/or Pilot Pollution Condition Determiner 170 and/or ICIC Controller 180 (FIG. 1). The multiple access wireless communication system includes multiple cellular regions (cells), including cells 702, 704, and 706, each of which may include one or more sectors. The multiple sectors can be formed by groups of antennas with each antenna responsible for communication with UEs in a portion of the cell. For example, in cell 702, antenna groups 712, 714, and 716 may each correspond to a different sector. In cell 704, antenna groups 717, 720, and 722 each correspond to a different sector. In cell 706, antenna groups 724, 726, and 728 each correspond to a different sector. The cells 702, 704 and 706 may include several wireless communication devices, e.g., User Equipment or UEs, for example, including reselection manager 104 of Fig. 1, which may be in communication with one or more sectors of each cell 702, 704 or 706. For example, UEs 730 and 732 may be in communication with NodeB 742, UEs 734 and 736 may be in communication with NodeB 744, and UEs 737 and 740 can be in communication with NodeB 746. Here, each NodeB 742, 744, 746 is configured to provide an access point for all the UEs 730, 732, 734, 736, 738, 740 in the respective cells 702, 704, and 706. Additionally, each NodeB 742, 744, 746 and UEs 730, 732, 734, 736, 738, 740 may be UE 102 of FIG. 1 and may perform the methods outlined herein.

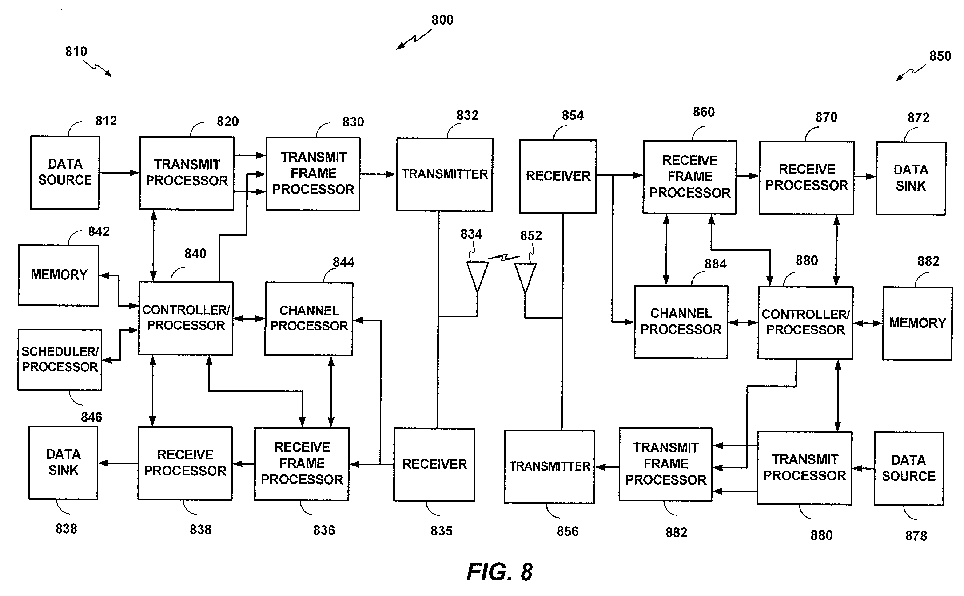

As the UE 734 moves from the illustrated location in cell 704 into cell 706, a serving cell change (SCC) or handover may occur in which communication with the UE 734 transitions from the cell 704, which may be referred to as the source cell, to cell 706, which may be referred to as the target cell. Management of the handover procedure may take place at the UE 734, at the Node Bs corresponding to the respective cells, at a radio network controller 806 (FIG. 8), or at another suitable node in the wireless network. For example, during a call with the source cell 704, or at any other time, the UE 734 may monitor various parameters of the source cell 704 as well as various parameters of neighboring cells such as cells 706 and 702. Further, depending on the quality of these parameters, the UE 734 may maintain communication with one or more of the neighboring cells. During this time, the UE 734 may maintain an Active Set, that is, a list of cells that the UE 734 is simultaneously connected to (i.e., the UTRA cells that are currently assigning a downlink dedicated physical channel DPCH or fractional downlink dedicated physical channel F-DPCH to the UE 734 may constitute the Active Set). In any case, UE 734 may execute reselection manager 104 to perform the reselection operations described herein.

Further, the modulation and multiple access scheme employed by the access network 700 may vary depending on the particular telecommunications standard being deployed. By way of example, the standard may include Evolution-Data Optimized (EV-DO) or Ultra Mobile Broadband (UMB). EV-DO and UMB are air interface standards promulgated by the 3rd Generation Partnership Project 2 (3GPP2) as part of the CDMA2000 family of standards and employs CDMA to provide broadband Internet access to mobile stations. The standard may alternately be Universal Terrestrial Radio Access (UTRA) employing Wideband-CDMA (W-CDMA) and other variants of CDMA, such as TD-SCDMA; Global System for Mobile Communications (GSM) employing TDMA; and Evolved UTRA (E-UTRA), Ultra Mobile Broadband (UMB), IEEE 902.11 (Wi-Fi), IEEE 902.16 (WiMAX), IEEE 902.20, and Flash-OFDM employing OFDMA. UTRA, E-UTRA, UMTS, LTE, LTE Advanced, and GSM are described in documents from the 3GPP organization. CDMA2000 and UMB are described in documents from the 3GPP2 organization. The actual wireless communication standard and the multiple access technology employed will depend on the specific application and the overall design constraints imposed on the system.

FIG. 8 is a block diagram of a NodeB 810 in communication with a UE 850, where the NodeB 810 may one or more of base stations 120, 130, and/or 14, and/or may include ICIC Manager 150 which may be configured to include Pilot Pollution Metric Identifier 160 and/or Pilot Pollution Condition Determiner 170 and/or ICIC Controller 180 (FIG. 1). In the downlink communication, a transmit processor 820 may receive data from a data source 812 and control signals from a controller/processor 840. The transmit processor 820 provides various signal processing functions for the data and control signals, as well as reference signals (e.g., pilot signals). For example, the transmit processor 820 may provide cyclic redundancy check (CRC) codes for error detection, coding and interleaving to facilitate forward error correction (FEC), mapping to signal constellations based on various modulation schemes (e.g., binary phase-shift keying (BPSK), quadrature phase-shift keying (QPSK), M-phase-shift keying (M-PSK), M-quadrature amplitude modulation (M-QAM), and the like), spreading with orthogonal variable spreading factors (OVSF), and multiplying with scrambling codes to produce a series of symbols. Channel estimates from a channel processor 844 may be used by a controller/processor 840 to determine the coding, modulation, spreading, and/or scrambling schemes for the transmit processor 820. These channel estimates may be derived from a reference signal transmitted by the UE 850 or from feedback from the UE 850. The symbols generated by the transmit processor 820 are provided to a transmit frame processor 830 to create a frame structure. The transmit frame processor 830 creates this frame structure by multiplexing the symbols with information from the controller/processor 840, resulting in a series of frames. The frames are then provided to a transmitter 832, which provides various signal conditioning functions including amplifying, filtering, and modulating the frames onto a carrier for downlink transmission over the wireless medium through antenna 834. The antenna 834 may include one or more antennas, for example, including beam steering bidirectional adaptive antenna arrays or other similar beam technologies.

At the UE 850, a receiver 854 receives the downlink transmission through an antenna 852 and processes the transmission to recover the information modulated onto the carrier. The information recovered by the receiver 854 is provided to a receive frame processor 860, which parses each frame, and provides information from the frames to a channel processor 894 and the data, control, and reference signals to a receive processor 870. The receive processor 870 then performs the inverse of the processing performed by the transmit processor 820 in the NodeB 88. More specifically, the receive processor 870 descrambles and despreads the symbols, and then determines the most likely signal constellation points transmitted by the NodeB 88 based on the modulation scheme. These soft decisions may be based on channel estimates computed by the channel processor 894. The soft decisions are then decoded and de-interleaved to recover the data, control, and reference signals. The CRC codes are then checked to determine whether the frames were successfully decoded. The data carried by the successfully decoded frames will then be provided to a data sink 872, which represents applications running in the UE 850 and/or various user interfaces (e.g., display). Control signals carried by successfully decoded frames will be provided to a controller/processor 890. When frames are unsuccessfully decoded by the receiver processor 870, the controller/processor 890 may also use an acknowledgement (ACK) and/or negative acknowledgement (NACK) protocol to support retransmission requests for those frames.

In the uplink, data from a data source 878 and control signals from the controller/processor 890 are provided to a transmit processor 880. The data source 878 may represent applications running in the UE 850 and various user interfaces (e.g., keyboard). Similar to the functionality described in connection with the downlink transmission by the NodeB 88, the transmit processor 880 provides various signal processing functions including CRC codes, coding and interleaving to facilitate FEC, mapping to signal constellations, spreading with OVSFs, and scrambling to produce a series of symbols. Channel estimates, derived by the channel processor 894 from a reference signal transmitted by the NodeB 88 or from feedback contained in the midamble transmitted by the NodeB 88, may be used to select the appropriate coding, modulation, spreading, and/or scrambling schemes. The symbols produced by the transmit processor 880 will be provided to a transmit frame processor 882 to create a frame structure. The transmit frame processor 882 creates this frame structure by multiplexing the symbols with information from the controller/processor 890, resulting in a series of frames. The frames are then provided to a transmitter 856, which provides various signal conditioning functions including amplification, filtering, and modulating the frames onto a carrier for uplink transmission over the wireless medium through the antenna 852.

The uplink transmission is processed at the NodeB 88 in a manner similar to that described in connection with the receiver function at the UE 850. A receiver 835 receives the uplink transmission through the antenna 834 and processes the transmission to recover the information modulated onto the carrier. The information recovered by the receiver 835 is provided to a receive frame processor 836, which parses each frame, and provides information from the frames to the channel processor 844 and the data, control, and reference signals to a receive processor 838. The receive processor 838 performs the inverse of the processing performed by the transmit processor 880 in the UE 850. The data and control signals carried by the successfully decoded frames may then be provided to a data sink 839 and the controller/processor, respectively. If some of the frames were unsuccessfully decoded by the receive processor, the controller/processor 840 may also use an acknowledgement (ACK) and/or negative acknowledgement (NACK) protocol to support retransmission requests for those frames.

The controller/processors 840 and 890 may be used to direct the operation at the NodeB 810 and the UE 850, respectively. For example, the controller/processors 840 and 890 may provide various functions including timing, peripheral interfaces, voltage regulation, power management, and other control functions. The computer readable media of memories 842 and 892 may store data and software for the NodeB 810 and the UE 850, respectively. A scheduler/processor 846 at the NodeB 810 may be used to allocate resources to the UEs and schedule downlink and/or uplink transmissions for the UEs.

Several aspects of a telecommunications system have been presented with reference to a W-CDMA system. As those skilled in the art will readily appreciate, various aspects described throughout this disclosure may be extended to other telecommunication systems, network architectures and communication standards.

By way of example, various aspects may be extended to other UMTS systems such as TD-SCDMA, High Speed Downlink Packet Access (HSDPA), High Speed Uplink Packet Access (HSUPA), High Speed Packet Access Plus (HSPA+) and TD-CDMA. Various aspects may also be extended to systems employing Long Term Evolution (LTE) (in FDD, TDD, or both modes), LTE-Advanced (LTE-A) (in FDD, TDD, or both modes), CDMA2000, Evolution-Data Optimized (EV-DO), Ultra Mobile Broadband (UMB), IEEE 802.11 (Wi-Fi), IEEE 802.16 (WiMAX), IEEE 802.20, Ultra-Wideband (UWB), Bluetooth, and/or other suitable systems. The actual telecommunication standard, network architecture, and/or communication standard employed will depend on the specific application and the overall design constraints imposed on the system.

In accordance with various aspects of the disclosure, an element, or any portion of an element, or any combination of elements may be implemented with a "processing system" that includes one or more processors. Examples of processors include microprocessors, microcontrollers, digital signal processors (DSPs), field programmable gate arrays (FPGAs), programmable logic devices (PLDs), state machines, gated logic, discrete hardware circuits, and other suitable hardware configured to perform the various functionality described throughout this disclosure. One or more processors in the processing system may execute software. Software shall be construed broadly to mean instructions, instruction sets, code, code segments, program code, programs, subprograms, software modules, applications, software applications, software packages, routines, subroutines, objects, executables, threads of execution, procedures, functions, etc., whether referred to as software, firmware, middleware, microcode, hardware description language, or otherwise. The software may reside on a computer-readable medium. The computer-readable medium may be a non-transitory computer-readable medium. A non-transitory computer-readable medium includes, by way of example, a magnetic storage device (e.g., hard disk, floppy disk, magnetic strip), an optical disk (e.g., compact disk (CD), digital versatile disk (DVD)), a smart card, a flash memory device (e.g., card, stick, key drive), random access memory (RAM), read only memory (ROM), programmable ROM (PROM), erasable PROM (EPROM), electrically erasable PROM (EEPROM), a register, a removable disk, and any other suitable medium for storing software and/or instructions that may be accessed and read by a computer.

The computer-readable medium may also include, by way of example, a carrier wave, a transmission line, and any other suitable medium for transmitting software and/or instructions that may be accessed and read by a computer. The computer-readable medium may be resident in the processing system, external to the processing system, or distributed across multiple entities including the processing system. The computer-readable medium may be embodied in a computer-program product. By way of example, a computer-program product may include a computer-readable medium in packaging materials. Those skilled in the art will recognize how best to implement the described functionality presented throughout this disclosure depending on the particular application and the overall design constraints imposed on the overall system.

It is to be understood that the specific order or hierarchy of steps in the methods disclosed is an illustration of exemplary processes. Based upon design preferences, it is understood that the specific order or hierarchy of steps in the methods may be rearranged. The accompanying method claims present elements of the various steps in a sample order, and are not meant to be limited to the specific order or hierarchy presented unless specifically recited therein.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language of the claims, wherein reference to an element in the singular is not intended to mean "one and only one" unless specifically so stated, but rather "one or more." Unless specifically stated otherwise, the term "some" refers to one or more. A phrase referring to "at least one of" a list of items refers to any combination of those items, including single members. As an example, "at least one of: a, b, or c" is intended to cover: a; b; c; a and b; a and c; b and c; and a, b and c.

## Claims

1. A method of triggering an inter cell interference coordination, ICIC, mechanism in a wireless network, the method r comprising the steps of:
identifying a pilot pollution metric selected from a list (202) comprising:
a number of pilots or common reference signals, CRS, within a pre
determined range of a serving cell pilot or CRS power level;
a combination of reference signal received power, RSRP, and reference signal received quality, RSRQ, measurements;
a combination of RSRP and interference, Io, measurements; and
a combination of RSRQ and Io measurements;
determining when a pilot pollution condition based at least on the pilot pollution metric is satisfied (204); and
triggering an ICIC mechanism when the pilot pollution condition is satisfied (206).

2. The method of claim 1, wherein identifying the pollution metric is performed at a user equipment, UE, or a cell.

3. The method of claim 1, wherein determining when the pilot condition is satisfied comprises comparing a value of the pilot pollution metric with a threshold value.

4. The method of claim 3, wherein the threshold value is configured at a network, cluster, or cell level.

5. The method of claim 1, wherein triggering the ICIC mechanism is performed in a centralized or distributed manner.

6. The method of claim 1, wherein triggering the ICIC mechanism is performed in a frequency domain or a time domain.

7. The method of claim 6, wherein the ICIC mechanism triggered in the frequency domain comprises performing a fractional frequency reuse, FFR, or a soft FFR procedure.

8. An apparatus for triggering an inter cell interference coordination, ICIC, mechanism in a network, the apparatus comprising:
means (304) for identifying a pilot pollution metric selected from a list comprising:
a number of pilots or common reference signals, CRS, within a pre-determined range of a serving cell pilot or CRS power level;
a combination of reference signal received power, RSRP, and reference signal received quality, RSRQ, measurements;
a combination of RSRP and interference, Io, measurements; and
a combination of RSRQ and Io measurements;
means (306) for determining when a pilot pollution condition based at least on the pilot pollution metric is satisfied; and
means (308) for triggering an ICIC mechanism when the pilot pollution condition is satisfied.

9. The apparatus of claim 8, wherein the means for identifying the pollution metric further comprises means for performing the identifying at a user equipment, UE, or a cell.

10. The apparatus of claim 8, wherein the means for determining when the pilot condition is satisfied further comprises means for comparing a value of the pilot pollution metric with a threshold value.

11. The apparatus of claim 10, wherein the means for comparing further comprises means for configuring the threshold value at a network, cluster or cell level.

12. The apparatus of claim 8, wherein means for triggering the ICIC mechanism further comprises means for triggering in a centralized or distributed manner.

13. The apparatus of claim 8, wherein means for triggering the ICIC mechanism further comprises means for triggering in a frequency domain or a time domain.

14. The apparatus of claim 13, wherein the means for triggering in the frequency domain further comprises means for performing a fractional frequency reuse, FFR, or a soft FFR procedure.

15. A readable medium having stored thereon computer executable instructions to cause a computer system to perform the method of any of claims 1 to 7.

## Patentansprüche

1. Ein Verfahren zum Auslösen eines Zwischenzelleninterferenzkoordinierungs-bzw. ICIC-Mechanismus (ICIC = inter cell interference coordination) in einem Drahtlosnetzwerk, wobei das Verfahren die folgenden Schritte aufweist:
Identifizieren einer Pilotbelastungsmetrik, die aus einer Liste (202) ausgewählt ist, die Folgendes aufweist:
eine Anzahl von Piloten oder gemeinsamen Referenzsignalen bzw. CRS (CRS = common reference signal) innerhalb eines vorbestimmten Bereichs eines Pilot- oder CRS-Leistungspegels einer versorgenden Zelle;
eine Kombination von Messungen einer empfangenen Leistung des Referenzsignals bzw. einer RSRP (RSRP = reference signal received power) und einer empfangenen Qualität des Referenzsignals bzw. einer RSRQ (RSRQ = reference signal received quality);
eine Kombination von RSRP- und Interferenz- bzw. lo-Messungen; und
eine Kombination von RSRQ- und lo-Messungen;
Bestimmen, wann eine Pilotbelastungsbedingung basierend auf wenigstens einer Pilotbelastungsmetrik erfüllt ist (204); und
Auslösen eines ICIC-Mechanismus, wenn die Pilotbelastungsbedingung erfüllt ist (206).

2. Verfahren nach Anspruch 1, wobei das Identifizieren der Belastungsmetrik an einer Nutzereinrichtung bzw. UE (UE = user equipment) oder einer Zelle durchgeführt wird.

3. Verfahren nach Anspruch 1, wobei das Bestimmen, wann die Pilotbedingung erfüllt ist, Vergleichen eines Wertes der Pilotbelastungsmetrik mit einem Schwellenwert aufweist.

4. Verfahren nach Anspruch 3, wobei der Schwellenwert auf einer Netzwerk-, Cluster- oder Zellenebene konfiguriert wird.

5. Verfahren nach Anspruch 1, wobei das Auslösen des ICIC-Mechanismus auf eine zentralisierte oder verteilte Weise durchgeführt wird.

6. Verfahren nach Anspruch 1, wobei das Auslösen des ICIC-Mechanismus in einem Frequenzbereich oder einem Zeitbereich durchgeführt wird.

7. Verfahren nach Anspruch 6, wobei der ICIC-Mechanismus, der im Frequenzbereich ausgelöst wird, Durchführen einer anteiligen Frequenzwiedernutzungs- bzw. FFR-Prozedur (FFR = fractional frequency reuse) oder einer Soft-FFR-Prozedur aufweist.

8. Eine Vorrichtung zum Auslösen eines Zwischenzelleninterferenzkoordinierungs- bzw. ICIC-Mechanismus (ICIC = inter cell interference coordination) in einem Netzwerk, wobei die Vorrichtung Folgendes aufweist:
Mittel (304) zum Identifizieren einer Pilotbelastungsmetrik, die aus einer Liste ausgewählt ist, die Folgendes aufweist:
eine Anzahl von Piloten oder gemeinsamen Referenzsignalen bzw. CRS (CRS = common reference signal) innerhalb eines vorbestimmten Bereichs eines Pilot- oder CRS-Leistungspegels einer versorgenden Zelle;
eine Kombination von Messungen einer empfangenen Leistung des Referenzsignals bzw. einer RSRP (RSRP = reference signal received power) und einer empfangenen Qualität des Referenzsignals bzw. einer RSRQ (RSRQ = reference signal received quality);
eine Kombination von RSRP- und Interferenz- bzw. lo-Messungen; und
eine Kombination von RSRQ- und lo-Messungen;
Mittel (306) zum Bestimmen, wann eine Pilotbelastungsbedingung basierend auf wenigstens einer Pilotbelastungsmetrik erfüllt ist; und
Mittel (308) zum Auslösen eines ICIC-Mechanismus, wenn die Pilotbelastungsbedingung erfüllt ist.

9. Vorrichtung nach Anspruch 8, wobei die Mittel zum Identifizieren der Belastungsmetrik weiter Mittel zum Durchführen des Identifizierens an einer Nutzereinrichtung bzw. UE oder einer Zelle aufweisen.

10. Vorrichtung nach Anspruch 8, wobei die Mittel zum Bestimmen, wann die Pilotbedingung erfüllt ist, weiter Mittel zum Vergleichen eines Wertes der Pilotbelastungsmetrik mit einem Schwellenwert aufweisen.

11. Vorrichtung nach Anspruch 10, wobei die Mittel zum Vergleichen weiter Mittel zum Konfigurieren des Schwellenwertes auf einer Netzwerk-, Cluster- oder Zellenebene aufweisen.

12. Vorrichtung nach Anspruch 8, wobei die Mittel zum Auslösen des ICIC-Mechanismus weiter Mittel zum Auslösen auf eine zentralisierte oder verteilte Weise aufweisen.

13. Vorrichtung nach Anspruch 8, wobei die Mittel zum Auslösen des ICIC-Mechanismus weiter Mittel zum Auslösen in einem Frequenzbereich oder einem Zeitbereich aufweisen.

14. Vorrichtung nach Anspruch 13, wobei die Mittel zum Auslösen im Frequenzbereich weiter Mittel zum Durchführen einer anteiligen Frequenzwiederverwendungs- bzw. FFR-Prozedur (FFR = fractional frequency reuse) oder einer Soft-FFR-Prozedur aufweisen.

15. Ein lesbares Medium, mit darauf gespeicherten, von einem Computer ausführbaren Instruktionen, um ein Computersystem zu veranlassen, das Verfahren nach einem der Ansprüche 1 bis 7 durchzuführen.

## Revendications

1. Un procédé de déclenchement d'un mécanisme de coordination de brouillage intercellulaire, ICIC, dans un réseau sans fil, le procédé comprenant les opérations suivantes :
l'identification d'une mesure de pollution de pilote sélectionnée à partir d'une liste (202) contenant :
un nombre de pilotes ou de signaux de référence communs, CRS, à l'intérieur d'une plage prédéterminée d'un niveau de puissance CRS ou de pilote de cellule de desserte,
une combinaison de mesures de puissance reçue de signal de référence, RSRP, et de qualité reçue de signal de référence, RSRQ,
une combinaison de mesures RSRP et de brouillage, Io, et
une combinaison de mesures RSRQ et Io,
la détermination du moment où une condition de pollution de pilote en fonction au moins de la mesure de pollution de pilote est satisfaite (204), et
le déclenchement d'un mécanisme ICIC lorsque la condition de pollution de pilote est satisfaite (206).

2. Le procédé selon la Revendication 1, où l'identification de la mesure de pollution est exécutée au niveau d'un équipement d'utilisateur, UE, ou d'une cellule.

3. Le procédé selon la Revendication 1, où la détermination du moment où la condition de pilote est satisfaite comprend la comparaison d'une valeur de la mesure de pollution de pilote à une valeur seuil.

4. Le procédé selon la Revendication 3, où la valeur seuil est configurée au niveau d'un réseau, d'une grappe ou d'une cellule.

5. Le procédé selon la Revendication 1, où le déclenchement du mécanisme ICIC est exécuté d'une manière centralisée ou distribuée.

6. Le procédé selon la Revendication 1, où le déclenchement du mécanisme ICIC est exécuté dans un domaine fréquentiel ou un domaine temporel.

7. Le procédé selon la Revendication 6, où le mécanisme ICIC déclenché dans le domaine fréquentiel comprend l'exécution d'une réutilisation de fréquence fractionnaire, FFR, ou d'une procédure FFR logicielle.

8. Un appareil destiné au déclenchement d'un mécanisme de coordination de brouillage intercellulaire, ICIC, dans un réseau, l'appareil comprenant :
un moyen (304) d'identification d'une mesure de pollution de pilote sélectionnée à partir d'une liste contenant :
un nombre de pilotes ou de signaux de référence communs, CRS, à l'intérieur d'une plage prédéterminée d'un niveau de puissance CRS ou de pilote de cellule de desserte,
une combinaison de mesures de puissance reçue de signal de référence, RSRP, et de qualité reçue de signal de référence, RSRQ,
une combinaison de mesures RSRP et de brouillage, Io, et
une combinaison de mesures RSRQ et Io,
un moyen (306) de détermination du moment où une condition de pollution de pilote en fonction au moins de la mesure de pollution de pilote est satisfaite, et
un moyen (308) de déclenchement d'un mécanisme ICIC lorsque la condition de pollution de pilote est satisfaite.

9. L'appareil selon la Revendication 8, où le moyen d'identification de la mesure de pollution comprend en outre un moyen d'exécution de l'identification au niveau d'un équipement d'utilisateur, UE, ou d'une cellule.

10. L'appareil selon la Revendication 8, où le moyen de détermination du moment où la condition de pilote est satisfaite comprend en outre un moyen de comparaison d'une valeur de la mesure de pollution de pilote à une valeur seuil.

11. L'appareil selon la Revendication 10, où le moyen de comparaison comprend en outre un moyen de configuration de la valeur seuil au niveau d'un réseau, d'une grappe ou d'une cellule.

12. L'appareil selon la Revendication 8, où le moyen de déclenchement du mécanisme ICIC comprend en outre un moyen de déclenchement d'une manière centralisée ou distribuée.

13. L'appareil selon la Revendication 8, où le moyen de déclenchement du mécanisme ICIC comprend en outre un moyen de déclenchement dans un domaine fréquentiel ou un domaine temporel.

14. L'appareil selon la Revendication 13, où le moyen de déclenchement dans le domaine fréquentiel comprend en outre un moyen d'exécution d'une réutilisation de fréquence fractionnaire, FFR, ou d'une procédure FFR logicielle.

15. Un support lisible possédant conservées en mémoire sur celui-ci des instructions exécutables par ordinateur destinées à amener un système informatique à exécuter le procédé selon l'une quelconque des Revendications 1 à 7.
